(19) Europäisches Patentamt / European Patent Office / Office européen des brevets

(11) **EP 2 419 990 B1**

(12) **EUROPÄISCHE PATENTSCHRIFT**

(45) Veröffentlichungstag und Bekanntmachung des Hinweises auf die Patenterteilung:
**26.12.2012 Patentblatt 2012/52**

(21) Anmeldenummer: **10708752.0**

(22) Anmeldetag: **25.02.2010**

(51) Int Cl.:
*H02J 7/14* *(2006.01)* *H01M 10/48* *(2006.01)*
*B60L 11/18* *(2006.01)*

(86) Internationale Anmeldenummer:
**PCT/EP2010/052406**

(87) Internationale Veröffentlichungsnummer:
**WO 2010/118912 (21.10.2010 Gazette 2010/42)**

(54) **ERWEITERTE BATTERIEDIAGNOSE BEI TRAKTIONSBATTERIEN**

EXTENDED BATTERY DIAGNOSIS FOR TRACTION BATTERIES

DIAGNOSTIC DE BATTERIE ÉTENDU POUR BATTERIES DE TRACTION

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **17.04.2009 DE 102009002466**

(43) Veröffentlichungstag der Anmeldung:
**22.02.2012 Patentblatt 2012/08**

(73) Patentinhaber: **Robert Bosch GmbH**
**70442 Stuttgart (DE)**

(72) Erfinder: **FINK, Holger**
**70567 Stuttgart (DE)**

(56) Entgegenhaltungen:
**EP-A1- 1 932 740 DE-A1-102006 038 675**
**US-A1- 2003 052 650 US-A1- 2006 240 291**

**Beschreibung**

Stand der Technik

Die vorliegende Erfindung betrifft ein Verfahren und eine Vorrichtung zur Ermittlung von Eigenschaften einer Batterie, insbesondere einer Traktionsbatterie, gemäß den Oberbegriffen der Patentansprüche 1 und 10.

Es zeichnet sich ab, dass in Zukunft sowohl bei stationären Anwendungen (z.B. bei Windkraftanlagen) als auch in Fahrzeugen (z.B. in Hybrid- und Elektrofahrzeugen) vermehrt neue Batteriesysteme zum Einsatz kommen werden. Die Begriffe Batterie und Batteriesystem werden in der vorliegenden Beschreibung dem üblichen Sprachgebrauch angepasst für Akkumulator bzw. Akkumulatorsystem verwendet.

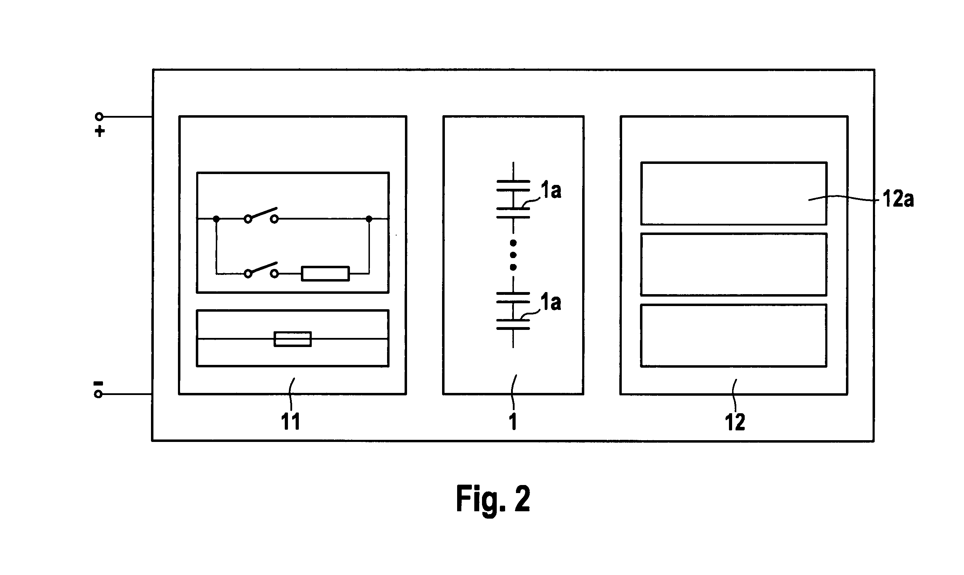

Der prinzipielle funktionale Aufbau eines Batteriesystems gemäß dem Stand der Technik ist in Figur 2 dargestellt. Um die geforderten Leistungs- und Energiedaten mit dem Batteriesystem zu erzielen, werden in einer Batterie einzelne Batteriezellen 1 a in Serie und teilweise zusätzlich parallel geschaltet. Zwischen den Batteriezellen 1 a und den Polen des Batteriesystems befindet sich eine sogenannte Safety&Fuse-Einheit 11, welche z.B. das Zu- und Abschalten der Batterie 1 an externe Systeme und die Absicherung des Batteriesystems gegen unzulässig hohe Ströme und Spannungen übernimmt sowie Sicherheitsfunktionen bereitstellt wie z.B. das einpolige Abtrennen der Batteriezellen 1 a von den Batteriesystempolen bei Öffnen des Batteriesystemgehäuses. Eine weitere Funktionseinheit bildet das Batteriemanagement 12, welches neben der Batteriezustandserkennung 12a auch die Kommunikation mit anderen Systemen sowie das Thermomanagement der Batterie 1 durchführt.

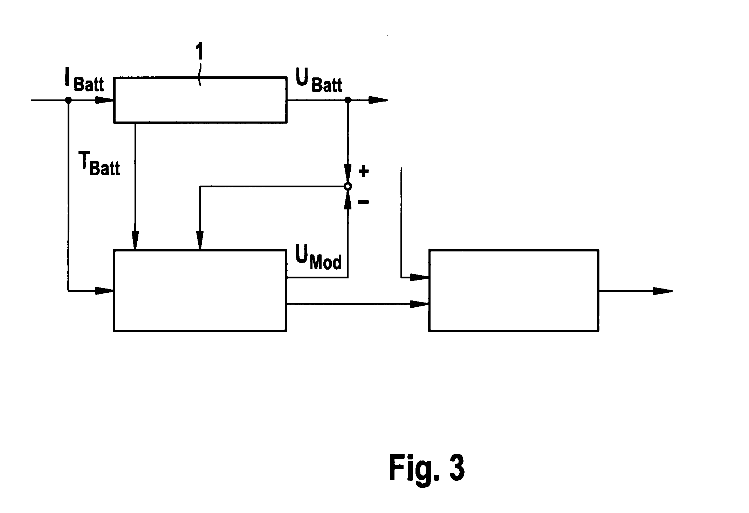

Die in Figur 2 dargestellte Funktionseinheit Batteriezustandserkennung 12a hat die Aufgabe, den aktuellen Zustand der Batterie 1 zu bestimmen sowie das künftige Verhalten der Batterie 1 vorherzusagen, z.B. eine Lebensdauervorhersage und/oder eine Reichweitenvorhersage. Die Vorhersage des künftigen Verhaltens wird auch als Prädiktion bezeichnet. Der prinzipielle Aufbau einer modellbasierten Batteriezustandserkennung ist in Figur 3 dargestellt. Die dargestellte modellbasierte Batteriezustandserkennung und -prädiktion basiert z.B. auf einer Auswertung der elektrischen Größen Batteriestrom und -spannung sowie der Temperatur der Batterie. Die Batteriezustandserkennung kann für einzelne Zellen 1 a einer Batterie 1 erfolgen. Dies erfolgt dann auf Basis der entsprechenden Zellspannung, des Zellstroms sowie der Zelltemperatur. Weiter kann die Batteriezustandserkennung auch für die gesamte Batterie 1 erfolgen. Dies erfolgt dann - je nach Anspruch an die Genauigkeit - entweder durch Auswertung der Zustände der einzelnen Zellen 1a der Batterie 1 und einer darauf basierenden Aggregation für die gesamte Batterie 1 oder direkt durch Auswertung der gesamten Batteriespannung, des Batteriestroms und der Batterietemperatur. Eine der wesentlichen Informationen, welche den Alterungszustand der Batteriezellen 1 a beschreiben, ist die Verringerung der Kapazität der Zellen 1a über die Lebensdauer. Allen heutigen Verfahren zur Ermittlung der Kapazität der Zellen 1 a ist gemein, dass die im normalen Betrieb der Batterie 1 auftretenden Strom-, Spannungs- und Temperaturverläufe für die Ermittlung der Kapazität herangezogen werden. Zur Ermittlung der Kapazität müssen dazu im Normalbetrieb der Zellen Änderungen des Ladezustands von mindestens 20% auftreten um eine zufriedenstellend Genauigkeit zu erzielen. Darüber hinaus ist die Ladung, die den Batteriezellen 1a insgesamt entnommen werden kann, sehr stark von der Höhe des Entladestroms abhängig. Daher ist eine genaue Bestimmung der Kapazität der Batteriezellen 1 a, welche sich auf Normentladungsbedingungen bei Raumtemperatur und einem Entladestrom von z.B. 1C (Entladestrom in A entspricht Nennkapazität der Batterie in Ah) beziehen, während des Normalbetriebs der Batterie 1 sehr schwierig, da hier beliebige Stromverläufe mit unterschiedliche hohen Entladeströmen und zwischendurch auftretenden Ladephasen auftreten können.

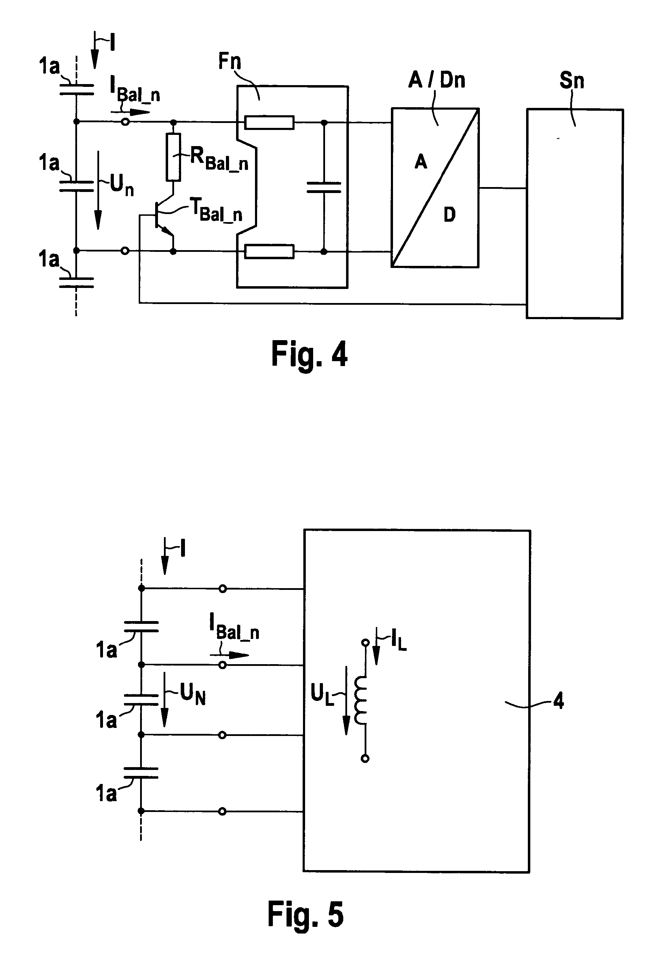

In Figur 4 ist das Funktionsprinzip einer Anordnung für das sogenannte resistive Balancing von Batteriezellen dargestellt. Aufgabe des Zellbalancings ist, bei einer Serienschaltung von mehreren Einzelzellen 1 a dafür zu sorgen, dass die Zellen 1 a alle nahezu den gleichen Ladezustand bzw. nahezu die gleiche Zellspannung aufweisen. Aufgrund der prinzipiell vorhandenen Unsymmetrien der Batteriezellen 1a, z.B. geringfügig unterschiedliche Kapazität, geringfügig unterschiedliche Selbstentladung, wäre dies ohne zusätzliche Maßnahmen bei Betrieb der Batterie 1 nicht gegeben. Beim resistiven Zellbalancing können die Batteriezellen 1 a über Zuschaltung eines parallel zu der Zelle angeordneten ohmschen Widerstands $R_{Bal\_n}$ entladen werden, indem der Widerstand $R_{Bal\_n}$ über den Transistor $T_{Bal-N}$ parallel zur Zelle n zugeschaltet wird. Durch Entladung jener Zellen 1 a, die einen höheren Ladezustand bzw. eine höhere Spannung aufweisen als die Zelle(n) 1a mit geringstem Ladezustand bzw. geringster Spannung kann eine Symmetrierung der Ladezustände bzw. Spannungen über alle Zellen 1 a der Batterie 1 herbeigeführt werden. Die Ansteuerung des Transistors $T_{Bal\_n}$ erfolgt über eine zugeordnete Steuer- und Auswerteeinheit $S_w$, die die Zellenspannung über einen Filter $F_n$ und einen Analog-Digital-Wandler $A/D_n$ abgreift. Bei Lithium-Ionen-Batterien, die aus einer Serienschaltung mehrerer Einzelzellen bestehen, ist der Einsatz von resistivem Zellbalancing Stand der Technik. Es gibt weiter auch andere Verfahren für das Zellbalancing, welche nahezu verlustfrei arbeiten können, z.B. das sogenannte induktive Zellbalancing, bei dem ein Umladen von in einzelnen Zellen 1a gespeicherter Energie z.B. über eine Induktivität erfolgt. Eine Prinzipdarstellung des induktiven Zellbalancings ist in Figur 5 gegeben.

Die zuvor dargestellte modellbasierte Batteriezustandserkennung und -prädiktion basiert auf einer Auswertung der elektrischen Größen Batteriestrom und -spannung sowie der Temperatur der Batterie. Allen Verfahren gemäß Stand der Technik ist dabei gemein, dass die im normalen Betrieb der Batterie auftretenden Strom-, Spannungs- und Temperaturverläufe der Batterie für die Ermittlung des Batteriezustands sowie für die Prädiktion des künftigen Verhaltens herangezogen werden. In Fahrzeugen arbeitet die Batteriezustandserkennung automatische. US2006240291 offenbart ein Verfahren zur Ermittlung von Eigenchaften einer Batterie gemäβ dem Stand der Technik.

Aufgabe der vorliegenden Erfindung ist es, ein neues Konzept für die Durchführung der Batteriezustandserkennung (Diagnose der Batterie) vorzustellen, mit dem die Batteriezustandserkennung und -prädiktion gegenüber dem heutigen Stand der Technik robuster und genauer realisiert werden kann.

Offenbarung der Erfindung

Das erfindungsgemäße Verfahren mit den Merkmalen des Patentanspruchs 1 und die erfindungsgemäße Vorrichtung mit den Merkmalen des Patentanspruchs 10 weisen demgegenüber den Vorteil auf, dass nicht nur die im Normalbetrieb im Fahrzeug auftretenden Betriebsabläufe für die Diagnose der Eigenschaften der Batterie herangezogen werden bzw. herangezogen werden können, sondern eine Diagnose nicht im Normalbetrieb oder Hauptbetrieb, sondern z.B. bei abgestelltem Fahrzeug erfolgt. Damit können erfindungsgemäß zur Diagnose der Eigenschaften der Batterie größere Stromänderungen und/oder Ladezustandsänderungen durchgeführt werden, um den Diagnose durchzuführen.

Die Unteransprüche zeigen bevorzugte Weiterbildungen der Erfindung.

Das erfindungsgemäße Verfahren und die erfindungsgemäße Vorrichtung umfassen, dass der Verbraucher in dem Hauptbetrieb von der Batterie versorgt wird und angeschaltet ist, also nicht ausgeschaltet ist und sich nicht im Standby-Betrieb befindet, insbesondere dass bei einem Fahrzeug als Verbraucher die Ermittlung der Eigenschaften der Batterie nur dann gestartet wird, wenn das Fahrzeug abgestellt ist.

Das erfindungsgemäße Verfahren umfasst zusätlich bevorzugt, dass die Ermittlung der Eigenschaften der Batterie nur dann gestartet wird, wenn ein Bediener des Verbrauchers die Ermittlung der Eigenschaften der Batterie initiiert. Die korrespondierende bevorzugte Weiterbildung der erfindungsgemäßen Vorrichtung umfasst hierfür eine Bedienerschnittstelle, die mit dem ersten Steuermodul verbunden ist, über die ein Bediener die Ermittlung der Eigenschaften der Batterie initiieren kann und die ein entsprechendes Steuersignal an das erste Steuermodul leitet.

Das erfindungsgemäße Verfahren umfasst weiter alternativ oder zusätzlich bevorzugt, dass die Ermittlung der Eigenschaften der Batterie nur dann gestartet wird, wenn eine Verhaltensvorhersage über den Bediener des Verbrauchers anzeigt, dass der Verbraucher mit einer über einem bestimmten Grenzwert liegenden Wahrscheinlichkeit in einer vorbestimmten folgenden Zeitspanne nicht in den Hauptbetrieb versetzt wird. Die korrespondierende bevorzugte Weiterbildung der erfindungsgemäßen Vorrichtung umfasst hierfür ein Wahrscheinlichkeitsmodul, das mit dem ersten Steuermodul verbunden ist, das eine Verhaltensvorhersage über den Bediener des Verbrauchers dahingehend durchführt, ob der Verbraucher mit einer über einem bestimmten Grenzwert liegenden Wahrscheinlichkeit in einer vorbestimmten folgenden Zeitspanne nicht in den Hauptbetrieb versetzt wird, und das ein entsprechendes Steuersignal an das erste Steuermodul leitet.

Erfindungsgemäß wird die Diagnose der Batterie also bevorzugt durch den Fahrer ausgelöst bei abgestelltem Fahrzeug durchgeführt. Dieses Konzept basiert darauf, dass der Fahrer die Diagnose der Batterie gezielt über das Mensch-Maschine-Interface des Fahrzeugs starten kann, wenn er beabsichtigt, das Fahrzeug für eine definierte Mindestdauer - z.B. mindestens zwei Stunden - abzustellen. Unter Annahme, dass das Fahrzeug erst nach der Mindestabstelldauer wieder gestartet wird, kann eine gegenüber dem heutigen Stand der Technik erweiterte Diagnose der Batterie durchgeführt werden, bei der wesentliche Parameter für die Batteriezustandserkennung und -prädiktion zuverlässig mit hoher Genauigkeit ermittelt werden können. Dies stellt eine wesentliche Verbesserung im Vergleich zu bisherigen Systemen dar.

Das erfindungsgemäße Verfahren umfasst noch weiter alternativ oder zusätzlich bevorzugt, dass zur Ermittelung der Kapazität der Batterie die folgenden Schritte ausgeführt werden: Überführen wenigstens einer Zelle der Batterie in einen ersten definierten Ladezustand, Entladen oder Laden der wenigstens einen Zelle der Batterie von dem ersten definierten Ladezustand bis zu einem zweiten definierten Ladezustand, wobei während des Entladens oder Ladens eine der wenigstens einen Zelle entnommene oder zugeführte Ladung bestimmt wird, und Ermitteln der Kapazität des Batteriesystems anhand der bestimmten entnommenen oder zugeführten Ladung der wenigstens einen Zelle. Die korrespondierende bevorzugte Weiterbildung der erfindungsgemäßen Vorrichtung umfasst hierfür ein zweites Steuermodul zum Überführen wenigstens einer Zelle der Batterie in einen ersten definierten Ladezustand und zum Entladen oder Laden der wenigstens einen Zelle der Batterie von dem ersten definierten Ladezustand bis zu einem zweiten definierten Ladezustand, ein Ladungsmessungsmodul, um eine der wenigstens einen Zelle entnommene oder zugeführte Ladung zu bestimmen, und ein Kapazitätsbestimmungsmodul zum Ermitteln der Kapazität des Batteriesystems anhand der bestimmten entnommenen oder zugeführten Ladung der wenigstens einen Zelle.

In diesem Fall umfassen das erfindungsgemäße Verfahren und die erfindungsgemäße Vorrichtung besonders bevorzugt, dass die der während des Entladens oder Ladens der wenigstens einen Zelle entnommene oder zugeführte Ladung anhand des Entladestroms oder Ladestroms und/oder einer während des Entladens oder Ladens an der wenigstens einen Zelle anliegenden Spannung und/oder der Ruhespannungsänderung der wenigstens einen Zelle bestimmt wird.

Bei der obigen Ermittlung der Kapazität der Batterie umfassen das erfindungsgemäße Verfahren und die erfindungsgemäße Vorrichtung besonders bevorzugt, dass der erste definierte Zustand ein voll geladener Zustand ist und der zweite definierte Zustand ein vollständig entladener Zustand ist, oder dass der erste definierte Zustand ein beliebiger Zustand der Zelle ist, der eine um wenigstens 20% höhere oder niedrigere Ladung als der zweite definierte Zustand aufweist.

Bei der obigen Ermittlung der Kapazität der Batterie umfassen das erfindungsgemäße Verfahren und die erfindungsgemäße Vorrichtung alternativ oder zusätzlich besonders bevorzugt, dass die Kapazität unter Berücksichtigung von Parametern des Entladevorgangs oder Ladevorgangs bestimmt wird, insbesondere unter Berücksichtigung des Entladestroms oder Ladestroms und/oder der Umgebungstemperatur während der Entladung und/oder dass die bestimmte Kapazität des Batteriesystems auf eine Normentladung umgerechnet wird. In der korrespondierenden bevorzugten Weiterbildung der erfindungsgemäßen Vorrichtung erfolgt dies durch das Kapazitätsbestimmungsmodul.

Bei der obigen Ermittlung der Kapazität der Batterie umfassen das erfindungsgemäße Verfahren und die erfindungsgemäße Vorrichtung weiter alternativ oder zusätzlich besonders bevorzugt, dass die Kapazität des Batteriesystems anhand der ermittelten entnommenen oder zugeführten Ladung aller Zellen ermittelt wird, wobei dies über mehrere Vorgänge des Startens der Ermittlung der Eigenschaften der Batterie erfolgen kann, oder dass die Kapazität des Batteriesystems anhand der ermittelten entnommenen oder zugeführten Ladung einer Anzahl von Zellen ermittelt wird, die geringer ist, als alle Zellen des Batteriesystems, wobei vorzugsweise von diesen Zellen anhand wenigstens einer zuvor durchgeführten Batteriezustandserkennung bekannt ist, dass diese eine größte und/oder eine kleinste und/oder eine durchschnittliche Kapazität aufweisen. In der korrespondierenden bevorzugten Weiterbildung der erfindungsgemäßen Vorrichtung erfolgt dies durch das zweite Steuermodul.

Bei der obigen Ermittlung der Kapazität der Batterie umfassen das erfindungsgemäße Verfahren und die erfindungsgemäße Vorrichtung weiter alternativ oder zusätzlich besonders bevorzugt, dass das Überführen wenigstens einer Zelle der Batterie in einen ersten definierten Ladezustand und das Entladen oder Laden der wenigstens einen Zelle mittels einer Schaltung für ein Zellbalancing, insbesondere mittels eines induktiven Verfahrens, erfolgt. In der korrespondierenden bevorzugten Weiterbildung der erfindungsgemäßen Vorrichtung erfolgt eine Ansteuerung der Schaltung für das Zellbalancing durch das zweite Steuermodul. Hier ist weiter bevorzugt das Ladungsmessungsmodul in der Schaltung für das Zellbalancing integriert.

Erfindungsgemäß wird also bevorzugt ein Verfahren zur Ermittlung der Kapazität von Batteriezellen beschrieben, das bei Batteriesystemen mit Einsatz von induktivem Zellbalancing ohne zusätzlichen elektronischen Schaltungsaufwand zum Einsatz kommen kann. Dieses Verfahren hat gegenüber dem heutigen Stand der Technik den Vorteil, dass zur Ermittlung der Kapazität immer wieder der gleiche Betriebablauf herbeigeführt werden kann und dadurch eine besonders robuste und genaue Bestimmung möglich wird. Darüber hinaus hat das neue Verfahren den Vorteil, dass es in Betriebsphasen eingesetzt wird, in denen die Batterie nicht in die Versorgung eines Verbrauchers eingebunden ist, also diesbezüglich an ihren Klemmen keine Leistung abgibt oder aufnimmt, d.h. z.B. bei abgestelltem Fahrzeug. Dies ist bei den aktuell bekannten Verfahren zur Kapazitätsbestimmung nicht möglich.

Zeichnung

Nachfolgend wird ein Ausführungsbeispiel der Erfindung unter Bezugnahme auf die begleitende Zeichnung im Detail beschrieben. In der Zeichnung zeigen:

Figur 1      ein Prinzipschaltbild einer ersten bevorzugten Ausführungsform einer erfindungsgemäßen Vorrichtung zur Ermittlung von Eigenschaften einer Batterie,

Figur 2      einen funktionalen Aufbau eines Batteriesystems gemäß dem Stand der Technik,

Figur 3      ein Prinzipschaltbild einer modellbasierten Batteriezustandserkennung und -prädiktion nach dem Stand der Technik,

Figur 4      ein Prinzipschaltbild einer Anordnung für ein resistives Zellbalancing der Batteriezellen nach dem Stand der Technik,

Figur 5      ein Prinzipschaltbild eines induktiven Balancing der Batteriezellen nach dem Stand der Technik, und

Figur 6      ein Diagramm der Ruhespannung einer Batteriezelle über deren Ladezustand.

Bevorzugte Ausführungsformen der Erfindung

Nachfolgend werden unter Bezugnahme auf die Figuren bevorzugte Ausführungsformen der Erfindung im Detail beschrieben.

Grundgedanke der vorliegenden Erfindung ist, die Diagnose bestimmter Batterieeigenschaften während längeren Abstellphasen durchzuführen. Dazu kann der Fahrer z.B. über das Mensch-Maschine-Interface (MMI) des Fahrzeugs aufgefordert werden, eine solche Batteriediagnose dann auszulösen, wenn er eine definierte Mindestabstelldauer sicher einhalten wird. Unter der Annahme, dass diese Mindestabstelldauer eingehalten wird, kann eine gegenüber dem heutigen Stand der Technik deutlich erweiterte bzw. genauere Diagnose bestimmter Batterieeigenschaften durchgeführt werden, ohne dass die Funktionalität des Batteriesystems bei Einhaltung der Mindestabstelldauer anschließend beeinträchtigt wird. So können z.B. länger dauernde Testprozeduren zur Bestimmung der aktuellen Kapazität der Batterie bzw. einzelner Batteriezellen durchgeführt werden. Je nach Ausführung der Diagnose kann es bei Nichteinhaltung der Mindestabstelldauer ggf. kurzfristig zu einer Einschränkung der Funktionalität des Batteriesystems kommen, z.B. kann dies sich bei der unmittelbar anschließenden Fahrt in einem Elektrofahrzeug durch eine verringerte Reichweite äußern.

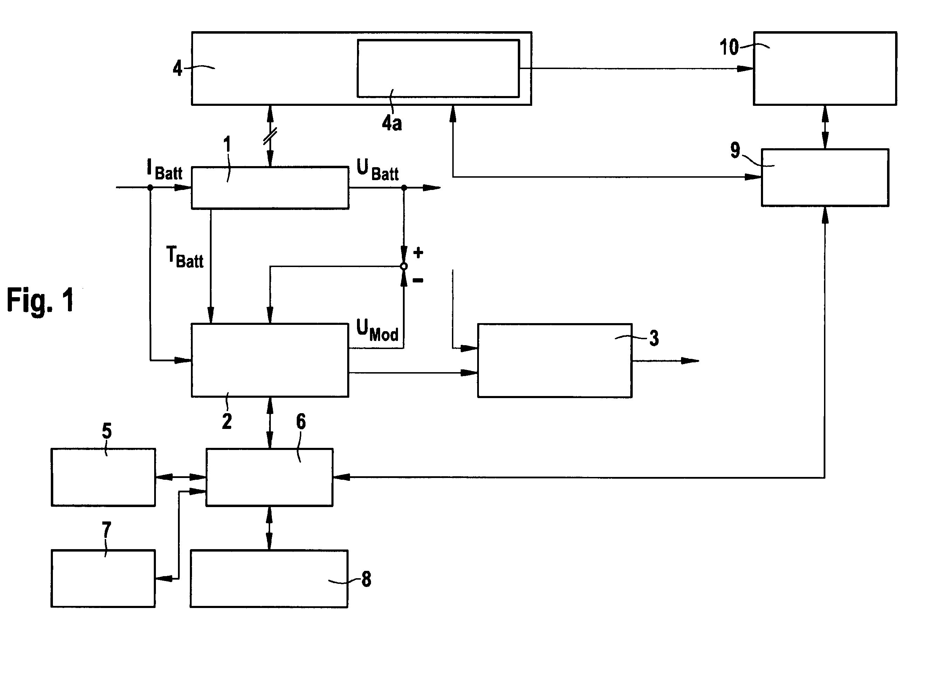

Hierfür ist erfindungsgemäß ein erstes Steuermodul 6 vorgesehen, welches die Batteriediagnose, z.B. über den Beobachter 2 mit Batteriemodell initiiert. Das Steuermodul 6 ist, wie es in Figur 1 dargestellt ist, mit einem Abfragemodul 5 verbunden, welches dem ersten Steuermodul 6 anzeigt, in welchem Betriebszustand sich der Verbraucher, hier das Fahrzeug, befindet, also z.B., ob es in einem Hauptbetrieb, d.h., fahrend, arbeitet, wozu hierzu auch ein kurzfristiges Anhalten zählt, oder ob es abgestellt ist. Weiter ist das erste Steuermodul 6 mit einer Bedienerschnittstelle 7 verbunden, die z.B. in das zuvor angesprochene Mensch-Maschine-Interface integriert ist, über die der Bediener das Verbrauchers, hier der Fahrer des Fahrzeugs, die Ermittlung der Eigenschaften der Batterie starten kann. Dies erfolgt erfindungsgemäß natürlich nur, wenn zu dem betreffenden Zeitpunkt der von dem Abfragemodul 5 ermittelte Betriebszustand des Verbrauchers anzeigt, dass dieser nicht in einem Hauptbetrieb arbeitet. Weiter ist das erste Steuermodul 6 mit einem Wahrscheinlichkeitsmodul 8 verbunden, das vorzugsweise die Ermittlung der Eigenschaften der Batterie nur dann zulässt, wenn eine von diesem getroffene Verhaltensvorhersage über den Bediener des Verbrauchers anzeigt, dass der Verbraucher mit einer über einen bestimmten Grenzwert liegenden Wahrscheinlichkeit in einer vorbestimmten folgenden Zeitspanne nicht in den Hauptbetrieb versetzt wird. Dies kann bei Fahrzeugen z.B. dann sein, wenn diese nachts in einer Garage geparkt werden.

In Figur 5 ist das Grundprinzip für das sogenannte induktive Zellbalancing dargestellt. Von induktivem Zellbalancing spricht man, wenn das Schaltungskonzept zur Angleichung der Zellspannungen bzw. des Ladezustands der Zellen auf einer induktiven Zwischenspeicherung der dabei transportierten elektrischen Energie beruht. Die Zwischenspeicherung kann - abhängig vom Schaltungskonzept - in Drosseln oder Übertragern erfolgen.

Beim induktiven Zellbalancing wird in einem ersten Schritt Energie aus einer oder mehrer Zellen entnommen und in dem induktiven Speicher zwischengespeichert. In einem zweiten Schritt wird die zwischengespeicherte Energie in eine oder mehrere Batteriezellen zurückgespeichert. Als Beispiele seien genannt:

- Energieentnahme aus einer Zelle und Zurückspeicherung in eine oder mehrere Zellen, wobei in die Zelle, aus der Energie entnommen wurde, nicht zurückgespeichert wird;
- Energieentnahme aus einer Zelle und Zurückspeicherung in eine oder mehrere Zellen, wobei ein Teil der Energie in die Zelle, aus der Energie entnommen wurde, zurückgespeichert wird;
- Energieentnahme aus mehreren Zelle und Zurückspeicherung in eine oder mehrere Zellen, wobei in die Zellen, aus denen Energie entnommen wurde, nicht zurückgespeichert wird;
- Energieentnahme aus mehreren Zellen und Zurückspeicherung in eine oder mehrere Zellen, wobei ein Teil der Energie in die Zellen, aus denen Energie entnommen wurde, zurückgespeichert wird.

Die Ladung, die im ersten Schritt aus der oder den Zellen entnommen wurde, kann über die Spannungszeitfläche bei bekannter Induktivität des zur Zwischenspeicherung der Energie eingesetzten Speichers wie folgt berechnet werden:

- Der zeitliche Verlauf des Stroms in dem induktiven Bauelement ergibt sich zu

$$I_L = \frac{1}{L} \int U_L \, dt \qquad\qquad (1)$$

Der Maximalstrom an Ende des ersten Schritt und sei mit $I_{Lmax}$ bezeichnet.

- Die im ersten Schritt entnommene Ladung kann wie folgt berechnet werden:

$$Q_{ent} = \int I_L dt \qquad (2)$$

Die Spannung $U_L$ an dem induktiven Bauelement kann dabei - unter Annahme idealer elektronischer Schalter mit Durchlasswiderstand gegen 0 sowie eines idealen induktiven Bauelements welches keinen ohmschen Innenwiderstand aufweist - einfach aus der oder den Spannungen jener Zellen, aus den die Energie entnommen wird, ermittelt werden. Über die Gleichungen (1) und (2) kann somit den Zellen entnommen Ladung bestimmt werden. Die nichtidealen Eigenschaften der für das Zellbalancing eingesetzten elektronischen Schalter sowie der induktiven Bauelemente bewirken bei geeigneter Dimensionierung der Bauelemente nur geringe Fehler bei der Ermittlung der Ladung, die der oder den Zellen entnommen wird.

In äquivalenter Form kann im 2. Schritt das Zurückspeisen der zwischengespeicherten Energie in die Zelle(n) berechnet werden:

• Der zeitliche Verlauf des Stroms in dem induktiven Bauelement ergibt sich zu

$$I_L = I_{L\,max} + \frac{1}{L}\int U_L dt \text{ , wobei } U_L < 0 \qquad (3a)$$

Nachdem der Strom IL den Wert 0 angenommen hat, gilt:

$$I_L = 0 \qquad (3b)$$

• Die im zweiten Schritt zurückgespeiste Ladung kann wie folgt berechnet werden:

$$Q_{zu} = \int I_L dt \qquad (4)$$

Somit kann der Ladungstransport, welcher bei der Durchführung des Zellbalancing zwischen den Batteriezellen erfolgt, bestimmt werden.

Erfindungsgemäß wird bevorzugt die Schaltung zur Durchführung des induktiven Zellbalancing dazu genutzt, die Kapazität der Batteriezellen zu ermitteln. Die Bestimmung der Kapazität erfolgt dabei in Phasen, in denen die Batterie an ihren Klemmen keine Leistung abgibt oder aufnimmt.

Zur Ermittlung der Kapazität einer Batteriezelle 1 a kann die Zelle 1 a ausgehend von dem Ladezustand, den sie beim Abstellen des Fahrzeugs aufweist, zunächst voll geladen werden. Dazu wird dieser Zelle 1a mit Hilfe der Schaltung 4 für das induktive Zellbalancing Ladung zugeführt, die aus anderen Batteriezellen 1a entnommen wird. Aufgrund des hohen Wirkungsgrades, den die Schaltung 4 für das induktive Zellbalancing bei geeigneter Dimensionierung aufweist, wird dabei nur ein geringer Teil der transportierten Energie in Wärme umgewandelt. Ausgehend von dem vollgeladenen Zustand wird die Zelle 1 a dann bis zu einem definierten Ladezustand (z.B. bis auf den Ladezustand 0%) entladen. Die dabei entnommene Ladung kann mit dem beschriebenen Verfahren ermittelt werden. Die entnommene Energie wird in anderen Zellen 1 a gespeichert. Die Zelle 1 a wird anschließend wieder geladen und es wird ein Zellbalancing zur Symmetrierung der Zellspannungen bzw. der Ladezustände durchgeführt. Auf diese Weise kann die Kapazität einer Batteriezelle 1 a sehr genau ermittelt werden. Die Höhe des Entladestroms hat Einfluss auf die Ladung, die der Batteriezelle 1 a während der Entladung insgesamt entnommen werden kann. Die ermittelte Kapazität bezieht sich somit auf die Parameter des Entladevorgangs (z.B. Entladestrom, Temperatur). Ein großer Vorteil des hier vorgestellten Verfahrens ist, dass immer wieder die gleichen Entladeströme zur Ermittlung der Kapazität herangezogen werden können und der Normalbetrieb (Hauptbetrieb) mit seinen von dem Batteriesystem nicht beeinflussbaren Stromverläufen keinen negativen Einfluss nimmt.

Die mit dem erfindungsgemäßen Verfahren ermittelte Kapazität der Batteriezelle kann auf eine sogenannte Normentladung (erfolgt z.B. bei Raumtemperatur, Entladestrom 1C (Entladestrom entspricht dem Nennkapazitätswert der Zelle, bei einer Zelle mit 4Ah Kapazität beträgt der 1C-Strom 4A)) umgerechnet werden.

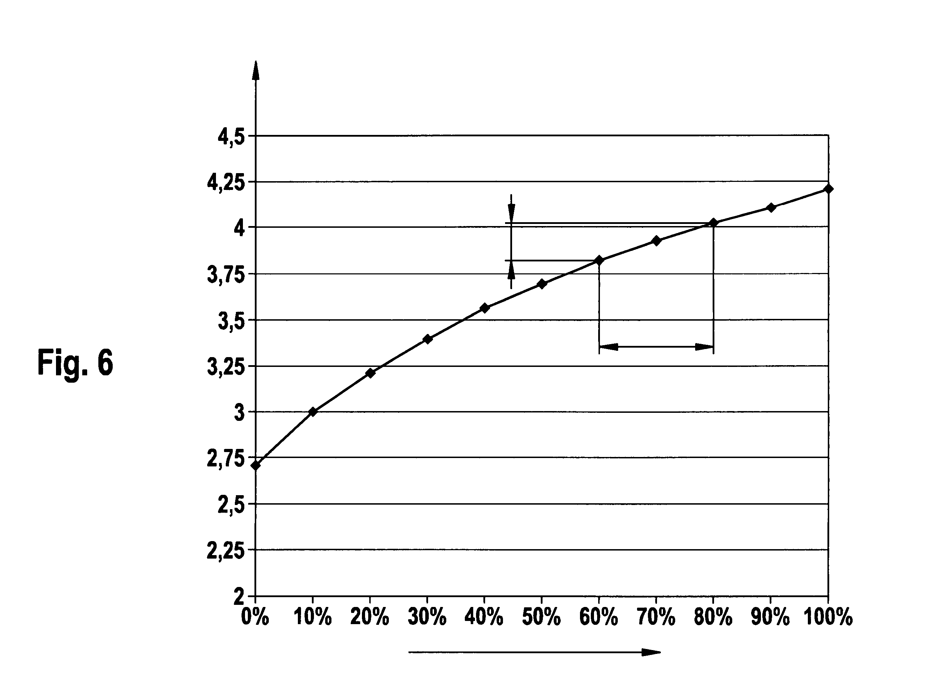

In einer abgewandelten Form des bevorzugten erfindungsgemäßen Verfahrens wird die Zelle 1 a nicht in den vollgeladenen Zustand gebracht und anschließend voll entladen, sondern es wird ein nur bestimmter Spannungsbereich der Zelle (bezogen auf die sogenannte Open Circuit Voltage OCV der Zelle (Leerlaufspannung)) bei der Entladung durchfahren und die dabei entnommene Ladung ausgewertet. Der Ladezustand der Zelle sollte sich dabei mindestens in der Größenordnung von 20% ändern, damit eine ausreichend genaue Bestimmung der Kapazität möglich wird. Ein Diagramm, das die Leerlaufspannung einer Zelle über deren Ladezustand angibt, ist in Figur 6 gezeigt. Hier kann entnommen werden, dass eine Leerlaufspannungsänderung oder Ruhespannungsänderung von = 0,2 V zwischen ca. 3,85 V und 4,05 V im Idealfall einer entnommenen bzw. zugeführten Ladung von 12 Ah entspricht, was wiederum bei einer 60 Ah-Zelle einer Ladungsänderung von 20% entspricht. Anhand der Abweichung von tatsächlicher entnommener bzw. zugeführter Ladung zu der gemäß dem Idealfall (= neue Zelle) kann z.B. auf die verbleibende Lebensdauer geschlossen werden.

Die Kapazität aller Einzelzellen 1a kann bei einer Batterie 1 mit sehr vielen in Reihe geschalteten Batteriezellen 1a ggf. nicht komplett während einer Abstellphase ermittelt werden, sondern muss sich über mehrere Abstellphasen erstrecken. Dies stellt für das beschriebene Verfahren jedoch keine Einschränkung dar. Häufig ist es auch völlig ausreichend, die Kapazität einiger weniger Zellen 1 a, z.B. die Werte jener Zellen, bei denen man aufgrund der Durchführung der Batteriezustandserkennung im Normalbetrieb davon ausgehen kann, dass Sie die größte bzw. die kleinste oder eine durchschnittliche Kapazität aufweisen, dem beschriebenen Verfahren zu unterziehen, um deren Kapazität mit hoher Genauigkeit zu ermitteln.

Die Verringerung der Kapazität der Batteriezellen 1 a über der Lebensdauer ist einer der wesentlichen Alterungsparameter der Batteriezellen 1 a. Eine genaue Kenntnis der aktuellen Kapazität der Zellen 1 a ist für die Batteriezustandserkennung und -prädiktion von wesentlicher Bedeutung. Bei den bisher bekannten Verfahren kann die Kapazität der Batteriezellen 1 a nur in Betriebsphasen ermittelt werden, bei denen der Ladzustand der Zellen sich während des "Normalbetriebs" (oder Hauptbetriebs) nennenswert ändert (z.B. um mindestens 30%) und während dieser Ladezustandsänderung keine extrem hohen Entladeströme auftreten. Daher kann die Ermittlung der Kapazität der Batteriezellen mit dem beschriebenen Verfahren im Vergleich zum Stand der Technik wesentlich robuster und genauer durchgeführt werden.

Für diese erfindungsgemäß bevorzugt durchgeführte Ermittlung der Kapazität der Batteriezellen ist ein zweites Steuermodul 9 vorgesehen, welches die Schaltung 4 für das Zellbalancing, die das Ladungsmessungsmodul 4a umfasst, sowie ein Kapazitätsbestimmungsmodul 10, das mit dem Ladungsmessungsmodul 4a verbunden ist, geeignet ansteuert. Das zweite Steuermodul 9 ist mit dem ersten Steuermodul 6 verbunden, damit dieses den jeweiligen Start einer Batteriediagnose initiieren kann.

Neben der obigen schriftlichen Offenbarung wird hier ausdrücklich auf die Offenbarung in den Figuren verwiesen.

## Patentansprüche

1. Verfahren zur Ermittlung von Eigenschaften einer Batterie (1), insbesondere einer Traktionsbatterie, insbesondere von einem Batteriezustand wie einer Kapazität und/oder einem Ladezustand und/oder einer verbleibenden Lebensdauer der Batterie (1), insbesondere mittels einer modellbasierten Zustandserkennung (2, 3), mit den Schritten

   - Abfragen eines Betriebszustandes eines von der Batterie (1) versorgten Verbrauchers, und
   - Starten der Ermittlung der Eigenschaften der Batterie (1) nur dann, wenn der Betriebszustand des versorgten Verbrauchers anzeigt, dass dieser nicht in einem Hauptbetrieb arbeitet

   **dadurch gekennzeichnet, dass**
   der Verbraucher in dem Hauptbetrieb von der Batterie (1) versorgt wird und angeschaltet ist, also nicht ausgeschaltet ist und sich nicht im Standby-Betrieb befindet, insbesondere bei einem Fahrzeug als Verbraucher die Ermittlung der Eigenschaften der Batterie (1) nur dann gestartet wird, wenn das Fahrzeug (1) abgestellt ist.

2. Verfahren nach Anspruch 1, **dadurch gekennzeichnet, dass** die Ermittlung der Eigenschaften der Batterie (1) nur dann gestartet wird, wenn ein Bediener des Verbrauchers die Ermittlung der Eigenschaften der Batterie (1) initiiert.

3. Verfahren nach einem der vorstehenden Ansprüche, **dadurch gekennzeichnet, dass** die Ermittlung der Eigenschaften der Batterie (1) nur dann gestartet wird, wenn eine Verhaltensvorhersage über den Bediener des Verbrauchers anzeigt, dass der Verbraucher mit einer über einem bestimmten Grenzwert liegenden Wahrscheinlichkeit in einer vorbestimmten folgenden Zeitspanne nicht in den Hauptbetrieb versetzt wird.

4. Verfahren nach einem der vorstehenden Ansprüche, wobei zur Ermittelung der Kapazität der Batterie (1) die folgenden Schritte ausgeführt werden:

- Überführen wenigstens einer Zelle (1a) der Batterie (1) in einen ersten definierten Ladezustand,
- Entladen oder Laden der wenigstens einen Zelle (1a) der Batterie (1) von dem ersten definierten Ladezustand bis zu einem zweiten definierten Ladezustand, wobei während des Entladens oder Ladens eine der wenigstens einen Zelle (1 a) entnommene oder zugeführte Ladung bestimmt wird, und
- Ermitteln der Kapazität der Batterie (1) anhand der bestimmten entnommenen oder zugeführten Ladung der wenigstens einen Zelle (1a).

5. Verfahren nach Anspruch 4, **dadurch gekennzeichnet, dass** die der während des Entladens oder Ladens der wenigstens einen Zelle entnommene oder zugeführte Ladung anhand des Entladestroms oder Ladestroms und/ oder einer während des Entladens oder Ladens an der wenigstens einen Zelle anliegenden Spannung und/oder der Ruhespannungsänderung der wenigstens einen Zelle bestimmt wird.

6. Verfahren nach Anspruch 4 oder 5, **dadurch gekennzeichnet, dass**

- der erste definierte Zustand ein voll geladener Zustand ist und der zweite definierte Zustand ein vollständig entladener Zustand ist, oder dass
- der erste definierte Zustand ein beliebiger Zustand der Zelle (1a) ist, der eine wenigstens 20% höhere Ladung oder niedrigere als der zweite definierte Zustand aufweist.

7. Verfahren nach einem der Ansprüche 4 bis 6, **dadurch gekennzeichnet, dass**

- die Kapazität unter Berücksichtigung von Parametern des Entladevorgangs oder Ladevorgangs bestimmt wird, insbesondere unter Berücksichtigung des Entladestroms oder Ladestroms und/oder der Umgebungstemperatur während der Entladung oder Ladung und/oder dass
- die bestimmte Kapazität der Batterie (1) auf eine Normentladung umgerechnet wird.

8. Verfahren nach einem der Ansprüche 4 bis 7, **dadurch gekennzeichnet, dass**

- die Kapazität der Batterie (1) anhand der ermittelten Ladung aller Zellen (1a) ermittelt wird, wobei dies über mehrere Vorgänge des Startens der Ermittlung der Eigenschaften der Batterie (1) erfolgen kann, oder dass
- die Kapazität der Batterie (1) anhand der ermittelten Ladung einer Anzahl von Zellen (1a) ermittelt wird, die geringer ist, als alle Zellen (1 a) der Batterie (1), wobei vorzugsweise von diesen Zellen (1 a) anhand wenigstens einer zuvor durchgeführten Batteriezustandserkennung bekannt ist, dass diese eine größte und/oder eine kleinste und/oder eine durchschnittliche Kapazität aufweisen.

9. Verfahren nach einem der Ansprüche 4 bis 8, **dadurch gekennzeichnet, dass**

- das Überführen wenigstens einer Zelle (1a) der Batterie (1) in einen ersten definierten Ladezustand und das Entladen oder Laden der wenigstens einen Zelle (1a) mittels einer Schaltung (4) für ein Zellbalancing, insbesondere mittels eines induktiven Verfahrens, erfolgt.

10. Vorrichtung zur Ermittlung von Eigenschaften einer Batterie (1), insbesondere einer Traktionsbatterie, insbesondere von einem Batteriezustand wie einer Kapazität und/oder einem Ladezustand und/oder einer verbleibenden Lebensdauer der Batterie (1), vorzugsweise mit einem Beobachter (2) und einem Batteriemodell für eine modellbasierte Zustandserkennung (3) mit

- einem Abfragemodul (5) zum Abfragen eines Betriebszustandes eines von der Batterie (1) versorgten Verbrauchers, und
- ein erstes Steuermodul (6) zum Starten der Ermittlung der Eigenschaften der Batterie (1) nur dann, wenn der Betriebszustand des versorgten Verbrauchers anzeigt, dass dieser nicht in einem Hauptbetrieb arbeitet.

**dadurch gekennzeichnet, dass** der Verbraucher in dem Hauptbetrieb von der Batterie (1) versorgt wird und angeschaltet ist, also nicht ausgeschaltet ist und sich nicht im Standby-Betrieb befindet, insbesondere bei einem

EP 2 419 990 B1

Fahrzeug als Verbraucher die Ermittlung der Eigenschaften der Batterie (1) nur dann gestartet wird, wenn das Fahrzeug abgestellt ist.

11. Vorrichtung nach Anspruch 10, **gekennzeichnet durch** eine Bedienerschnittstelle (7), die mit dem ersten Steuermodul (6) verbunden ist, über die ein Bediener die Ermittlung der Eigenschaften der Batterie (1) initiieren kann und die ein entsprechendes Steuersignal an das erste Steuermodul (6) leitet.

12. Vorrichtung nach einem der Ansprüche 10 bis 11, **gekennzeichnet durch** ein Wahrscheinlichkeitsmodul (8), das mit dem ersten Steuermodul (6) verbunden ist, das eine Verhaltensvorhersage über den Bediener des Verbrauchers dahingehend durchführt, ob der Verbraucher mit einer über einem bestimmten Grenzwert liegenden Wahrscheinlichkeit in einer vorbestimmten folgenden Zeitspanne nicht in den Hauptbetrieb versetzt wird, und das ein entsprechendes Steuersignal an das erste Steuermodul (6) leitet.

13. Vorrichtung nach einem der Ansprüche 10 bis 11, **gekennzeichnet durch**

   - ein zweites Steuermodul (9) zum Überführen wenigstens einer Zelle (1a) der Batterie (1) in einen ersten definierten Ladezustand und zum Entladen oder Laden der wenigstens einen Zelle (1a) der Batterie (1) von dem ersten definierten Ladezustand bis zu einem zweiten definierten Ladezustand,
   - ein Ladungsmessungsmodul (4a), um eine der Zelle (1a) entnommene oder zugeführte Ladung zu bestimmen, und
   - ein Kapazitätsbestimmungsmodul (10) zum Ermitteln der Kapazität der Batterie (1) anhand der bestimmten entnommenen oder zugeführten Ladung der wenigstens einen Zelle (1a).

14. Vorrichtung nach Anspruch 13, **dadurch gekennzeichnet, dass** das Ladungsmessmodul die der während des Entladens oder Ladens der wenigstens einen Zelle entnommene oder zugeführte Ladung anhand des Entladestroms oder Ladestroms und/oder einer während des Entladens oder Ladens an der wenigstens einen Zelle anliegenden Spannung und/oder der Ruhespannungsänderung der wenigstens einen Zelle bestimmt wird.

15. Vorrichtung nach Anspruch 13 oder 14, **dadurch gekennzeichnet, dass**

   - der erste definierte Zustand ein voll geladener Zustand ist und der zweite definierte Zustand ein vollständig entladener Zustand ist, oder dass
   - der erste definierte Zustand ein beliebiger Zustand der Zelle (1a) ist, der eine wenigstens 20% höhere Ladung oder niedrigere als der zweite definierte Zustand aufweist.

16. Vorrichtung nach einem der Ansprüche 13 bis 15, **dadurch gekennzeichnet, dass** das Kapazitätsbestimmungsmodul (10)

   - die Kapazität unter Berücksichtigung von Parametern des Entladevorgangs oder Ladevorgangs bestimmt, insbesondere unter Berücksichtigung des Entladestroms oder Ladestroms und/oder der Umgebungstemperatur während der Entladung oder Ladung, und/oder
   - die bestimmte Kapazität der Batterie (1) auf eine Normentladung umrechnet.

17. Vorrichtung nach einem der Ansprüche 13 bis 16, **dadurch gekennzeichnet, dass** das zweite Steuermodul (9)

   - alle Zellen (1a) der Batterie (1) in einen ersten definierten Ladezustand bringt und bis zu einem zweiten definierten Ladezustand entlädt oder lädt, damit die Kapazität der Batterie (1) anhand der ermittelten Ladung aller Zellen ermittelt wird, wobei dies über mehrere von dem ersten Steuermodul (6) gesteuerte Vorgänge des Startens der Ermittlung der Eigenschaften der Batterie (1) erfolgen kann, oder dass
   - eine Anzahl von Zellen (1a), die geringer ist, als alle Zellen (1a) der Batterie (1), wobei vorzugsweise von diesen Zellen (1a) anhand wenigstens einer zuvor durchgeführten Batteriezustandserkennung bekannt ist, dass diese eine größte und/oder eine kleinste und/oder eine durchschnittliche Kapazität aufweisen, in einen ersten definierten Ladezustand bringt und bis zu einem zweiten definierten Ladezustand entlädt, damit die Kapazität der Batterie (1) anhand der geringeren Anzahl von Zellen (1a) ermittelt wird.

18. Vorrichtung nach einem der Ansprüche 13 bis 17, **dadurch gekennzeichnet, dass**

   - das zweite Steuermodul (9) eine Schaltung (4) für ein Zellbalancing, insbesondere für ein induktives Zellbalancing, ansteuert, um die wenigstens eine Zelle (1a) der Batterie (1) in einen ersten definierten Ladezustand zu bringen und bis zu einem zweiten definierten Ladezustand zu entladen.

19. Vorrichtung nach der Anspruch 18, **dadurch gekennzeichnet, dass**

    - das Ladungsmessungsmodul (4a) in der Schaltung (4) für ein Zellbalancing integriert ist.

**Claims**

1. Method for establishing properties of a battery (1), in particular of a traction battery, in particular a battery state such as a capacity and/or a state of charge and/or a remaining service life of the battery (1), in particular by means of model-based state identification (2, 3), comprising the steps of:

    - checking an operating state of a load which is supplied with power by the battery (1), and
    - starting the process of establishing the properties of the battery (1) only when the operating state of the supplied load indicates that said load is not operating in a principal mode,

**characterized in that**
the load is supplied with power by the battery (1) in the principal mode and is switched on, that is to say is not switched off, and is not in the standby mode, in particular **in that**, in the case of a vehicle as the load, the process of establishing the properties of the battery (1) is started only when the vehicle (1) is turned off.

2. Method according to Claim 1, **characterized in that** the process of establishing the properties of the battery (1) is started only when an operator of the load initiates the process of establishing the properties of the battery (1).

3. Method according to either of the preceding claims, **characterized in that** the process of establishing the properties of the battery (1) is started only when a prediction of behaviour by the operator of the load indicates with a level of probability which is above a specific limit value that the load will not be moved to the principal mode within a predetermined following time period.

4. Method according to one of the preceding claims, with the following steps being executed in order to establish the capacity of the battery (1):

    - changing over at least one cell (1a) of the battery (1) to a first defined state of charge,
    - discharging or charging the at least one cell (1a) of the battery (1) from the first defined state of charge to a second defined state of charge, with a charge which is drawn from or supplied to the at least one cell (1a) being determined during the discharging or charging process, and
    - establishing the capacity of the battery (1) on the basis of the determined charge which is drawn from or supplied to the at least one cell (1a).

5. Method according to Claim 4, **characterized in that** the charge which is drawn from or supplied to the at least one cell during the discharging or charging process is determined on the basis of the discharge current or charge current and/or a voltage which is applied to the at least one cell during the discharging or charging process and/or the change in the open-circuit voltage of the at least one cell.

6. Method according to Claim 4 or 5, **characterized in that**

    - the first defined state is a fully charged state and the second defined state is a fully discharged state, or **in that**
    - the first defined state is any desired state of the cell (1a) which has a charge which is at least 20% higher or lower than the second defined state.

7. Method according to one of Claims 4 to 6, **characterized in that**

    - the capacity is determined taking into account parameters of the discharging process or charging process, in particular taking into account the discharge current or charge current and/or the ambient temperature during the discharging or charging process and/or **in that**
    - the determined capacity of the battery (1) is converted to a standard discharge.

**8.** Method according to one of Claims 4 to 7, **characterized in that**

- the capacity of the battery (1) is established on the basis of the established charge of all the cells (1a), it being possible for this to be carried out over several processes for starting the process of establishing the properties of the battery (1), or **in that**
- the capacity of the battery (1) is established on the basis of the established charge of a number of cells (1a) which is lower than all the cells (1a) of the battery (1), with it preferably being known of these cells (1a) on the basis of at least one previously carried out battery state identification process that the said cells have a maximum and/or a minimum and/or an average capacity.

**9.** Method according to one of Claims 4 to 8, **characterized in that**

- at least one cell (1a) of the battery (1) is changed over to a first defined state of charge and the at least one cell (1a) is discharged or charged by means of a circuit (4) for cell balancing, in particular by means of an inductive process.

**10.** Apparatus for establishing properties of a battery (1), in particular of a traction battery, in particular a battery state such as a capacity and/or a state of charge and/or a remaining service life of the battery (1), preferably using an observer (2) and a battery model for model-based state identification (3), comprising:

- a checking module (5) for checking an operating state of a load which is supplied with power by the battery (1), and
- a first control module (6) for starting the process of establishing the properties of the battery (1) only when the operating state of the load which is supplied with power indicates that the said load is not operating in a principal mode,

**characterized in that** the load is supplied with power by the battery (1) in the principal mode and is switched on, that is to say is not switched off, and is not in the standby mode, in particular **in that**, in the case of a vehicle as the load, the process of establishing the properties of the battery (1) is started only when the vehicle is turned off.

**11.** Apparatus according to Claim 10, **characterized by** an operator interface (7) which is connected to the first control module (6) and by means of which an operator can initiate the process of establishing the properties of the battery (1) and which conducts a corresponding control signal to the first control module (6).

**12.** Apparatus according to either of Claims 10 and 11, **characterized by** a probability module (8) which is connected to the first control module (6), which carries out a behaviour prediction by the operator of the load to determine with a level of probability which is above a specific limit value whether the load will not be moved to the principal mode within a predetermined following time period, and which conducts a corresponding control signal to the first control module (6).

**13.** Apparatus according to either of Claims 10 and 11, **characterized by**

- a second control module (9) for changing over at least one cell (1a) of the battery (1) to a first defined state of charge and for discharging or charging the at least one cell (1a) of the battery (1) from the first defined state of charge to a second defined state of charge,
- a charge measuring module (4a) in order to determine a charge which is drawn from or supplied to the cell (1a), and
- a capacity determining module (10) for establishing the capacity of the battery (1) on the basis of the determined charge which is drawn from or supplied to the at least one cell (1a).

**14.** Apparatus according to Claim 13, **characterized in that** the charge measuring module determines the charge which is drawn from or supplied to the at least one cell during the discharging or charging process on the basis of the discharge current or charge current and/or a voltage which is applied to the at least one cell during the discharging or charging process and/or the change in the open-circuit voltage of the at least one cell.

**15.** Apparatus according to Claim 13 or 14, **characterized in that**

- the first defined state is a fully charged state and the second defined state is a fully discharged state, or **in that**

- the first defined state is any desired state of the cell (1a) which has a charge which is at least 20% higher or lower than the second defined state.

16. Apparatus according to one of Claims 13 to 15, **characterized in that** the capacity determining module (10)

- determines the capacity taking into account parameters of the discharging process or charging process, in particular taking into account the discharge current or charge current and/or the ambient temperature during the discharging or charging process and/or
- converts the determined capacity of the battery (1) to a standard discharge.

17. Apparatus according to one of Claims 13 to 16, **characterized in that** the second control module (9)

- moves all the cells (1a) of the battery (1) to a first defined state of charge and discharges or charges the said cells to a second defined state of charge so that the capacity of the battery (1) is established on the basis of the established charge of all the cells, it being possible for this to be carried out over several processes, which are controlled by the first control module (6), for starting the process of establishing the properties of the battery (1), or
- moves a number of cells (1a), which is lower than all the cells (1a) of the battery (1), with it preferably being known of these cells (1a) on the basis of at least one previously carried out battery state identification process that the said cells have a maximum and/or a minimum and/or an average capacity, to a first defined state of charge and discharges the said cells to a second defined state of charge so that the capacity of the battery (1) is established on the basis of the lower number of cells (1a).

18. Apparatus according to one of Claims 13 to 17, **characterized in that**

- the second control module (9) drives a circuit (4) for cell balancing, in particular for inductive cell balancing, in order to move the at least one cell (1a) of the battery (1) to a first defined state of charge and to discharge the said cell to a second defined state of charge.

19. Apparatus according to Claim 18, **characterized in that**

- the charge measuring module (4a) is integrated in the circuit (4) for cell balancing.

**Revendications**

1. Procédé de détermination de propriétés d'une batterie (1), en particulier d'une batterie de traction, en particulier pour déterminer un état de la batterie, par exemple la capacité, l'état de charge et/ou la durée de vie résiduelle de la batterie (1), en particulier au moyen d'une détection d'état (2, 3) basée sur modèle, le procédé comportant les étapes suivantes:

- demander l'état de fonctionnement d'un consommateur alimenté par la batterie (1) et
- lancer la détermination des propriétés de la batterie (1) uniquement si l'état de fonctionnement du consommateur alimenté indique que ce dernier ne travaille pas dans un mode principal,

**caractérisé en ce que**
en mode principal, le consommateur est alimenté par la batterie (1) et est raccordé, n'est donc pas débranché et ne se trouve pas en mode d'attente et **en ce qu'**en particulier lorsque le consommateur est un véhicule automobile, la détermination des propriétés de la batterie (1) n'est lancée que lorsque le véhicule (1) est à l'arrêt.

2. Procédé selon la revendication 1, **caractérisé en ce que** la détermination des propriétés de la batterie (1) n'est lancée que si un utilisateur du consommateur lance la détermination des propriétés de la batterie (1).

3. Procédé selon l'une des revendications précédentes, **caractérisé en ce que** la détermination des propriétés de la batterie (1) n'est lancée que si une prédiction de comportement effectuée par l'utilisateur du consommateur indique avec une probabilité supérieure à une valeur limite définie que le consommateur ne sera pas transféré en mode principal pendant une durée définie à l'avance.

**4.** Procédé selon l'une des revendications précédentes, dans lequel les étapes suivantes sont exécutées pour déterminer la capacité de la batterie (1) :

- transfert d'au moins une cellule (1a) de la batterie (1) dans un premier état de charge défini,
- décharge ou charge de la ou des cellules (1a) de la batterie (1) depuis un premier état de charge défini jusqu'à un deuxième état de charge défini, la charge prélevée ou apportée pendant la décharge ou la charge de la ou d'une des cellules (1a) étant déterminée et
- détermination de la capacité de la batterie à l'aide de la charge prélevée ou apportée définie à la ou aux cellules (1a).

**5.** Procédé selon la revendication 4, **caractérisé en ce que** la charge prélevée ou apportée pendant la décharge ou la charge de la ou des cellules est déterminée à l'aide du courant de décharge ou du courant de charge, d'une tension appliquée sur la ou les cellules pendant la décharge ou la charge et/ou de la modification de la tension au repos de la ou des cellules.

**6.** Procédé selon les revendications 4 ou 5, **caractérisé en ce que**

- le premier état défini est un état de pleine charge et le deuxième état défini est un état de pleine décharge ou **en ce que**
- le premier état défini est un état quelconque de la cellule (1a) qui présente une charge d'au moins 20 % plus élevée ou plus basse que le deuxième état défini.

**7.** Procédé selon l'une des revendications 4 à 6, **caractérisé en ce que**

- la capacité est déterminée en tenant compte de paramètres de l'opération de décharge ou de l'opération de charge, et en particulier en tenant compte du courant de décharge ou du courant de charge et/ou de la température ambiante pendant la décharge ou la charge, et/ou **en ce que**
- la capacité définie de la batterie (1) est convertie en une décharge nominale.

**8.** Procédé selon l'une des revendications 4 à 7, **caractérisé en ce que**

- la capacité de la batterie (1) est déterminée à l'aide de la charge déterminée de toutes les cellules (1a), ce qui peut s'effectuer par plusieurs opérations de lancement de la détermination des propriétés de la batterie (1), ou **en ce que**
- la capacité de la batterie (1) est déterminée à l'aide de la charge déterminée d'un nombre de cellules (1a) plus petit que le nombre total des cellules (1a) de la batterie (1) de préférence en sachant à l'aide d'au moins une détection de l'état de la batterie réalisée précédemment que ces cellules (1a) présentent la plus grande capacité, la plus petite capacité et/ou une capacité moyenne.

**9.** Procédé selon l'une des revendications 4 à 8, **caractérisé en ce que**

- le transfert d'au moins une cellule (1a) de la batterie (1) dans un premier état de charge défini et la décharge ou la charge de la ou des cellules (1a) s'effectuent au moyen d'un circuit (4) d'équilibrage des cellules, en particulier en recourant à un procédé inductif.

**10.** Dispositif de détermination de propriétés d'une batterie (1), en particulier d'une batterie de traction, en particulier pour déterminer un état de la batterie, par exemple la capacité, l'état de charge et/ou la durée de vie résiduelle de la batterie (1), présentant de préférence un observateur (2) et un modèle de batterie permettant de détecter (3) son état sur la base d'un modèle, le dispositif présentant :

- un module d'interrogation (5) qui demande l'état de fonctionnement d'un consommateur alimenté par la batterie (1) et
- un premier module de commande (6) qui lance la détermination des propriétés de la batterie (1) uniquement lorsque l'état de fonctionnement du consommateur alimenté indique qu'il ne se trouve pas en mode principal,

**caractérisé en ce qu'**en mode principal, le consommateur est alimenté par la batterie (1) et est raccordé, n'est donc pas débranché et ne se trouve pas en mode d'attente et **en ce qu'**en particulier lorsque le consommateur est un véhicule automobile, la détermination des propriétés de la batterie (1) n'est lancée que lorsque le véhicule (1) est à l'arrêt.

**11.** Dispositif selon la revendication 10, **caractérisé par** une interface d'utilisateur (7) reliée au premier module de commande (6), qui permet à un utilisateur de lancer la détermination des propriétés de la batterie (1) et qui envoie un signal de commande approprié au premier module de commande (6).

**12.** Dispositif selon l'une des revendications 10 et 11, **caractérisé par** un module de probabilité (8) relié au premier module de commande (6), qui exécute une prédiction du comportement par l'utilisateur du consommateur en vérifiant avec une probabilité supérieure à une valeur limite prédéterminée que le consommateur ne sera pas transféré en mode principal pendant une durée définie à l'avance et qui délivre un signal de commande approprié au premier module de commande (6).

**13.** Dispositif selon l'une des revendications 10 et 11, **caractérisé par**

- un deuxième module de commande (9) qui transfère au moins une cellule (1a) de la batterie (1) dans un premier état de charge défini et qui décharge ou charge la ou les cellules (1a) de la batterie (1) depuis le premier état de charge défini jusqu'à un deuxième état de charge défini,
- un module (4a) de mesure de charge qui détermine une charge prélevée ou apportée à la cellule (la) et
- un module (10) de détermination de capacité qui détermine la capacité de la batterie (1) à l'aide de la charge prélevée ou apportée à la ou aux cellules (1a).

**14.** Dispositif selon la revendication 13, **caractérisé en ce que** le module de mesure de charge détermine la charge prélevée ou apportée pendant la décharge ou la charge de la ou des cellules à l'aide du courant de décharge ou du courant de charge, d'une tension appliquée sur la ou les cellules pendant la décharge ou la charge et/ou de la modification de la tension au repos de la ou des cellules.

**15.** Dispositif selon les revendications 13 ou 14, **caractérisé en ce que**

- le premier état défini est un état de pleine charge et le deuxième état défini un état de pleine décharge ou **en ce que**
- le premier état défini est un état quelconque de la cellule (1a) qui présente une charge d'au moins 20 % plus élevée ou plus basse que le deuxième état défini.

**16.** Dispositif selon l'une des revendications 13 à 15, **caractérisé en ce que** le module (10) de détermination de capacité

- détermine la capacité en tenant compte de paramètres de l'opération de décharge ou de l'opération de charge, en particulier en tenant compte du courant de décharge ou du courant de charge et/ou de la température ambiante pendant la décharge ou la charge, et/ou
- convertit la capacité définie de la batterie (1) en une décharge nominale.

**17.** Dispositif selon l'une des revendications 13 à 16, **caractérisé en ce que** le deuxième module de commande (9)

- amène toutes les cellules (1a) de la batterie (1) dans un premier état de charge défini et les décharge ou les charge jusqu'à un deuxième état de charge défini en déterminant ainsi la capacité de la batterie (1) à l'aide de la charge déterminée pour toutes les cellules, ce qui peut s'effectuer par plusieurs opérations de lancement de la détermination des propriétés de la batterie (1) commandées par le premier module de commande (6), ou
- amène un nombre de cellules (1a) plus petit que le nombre total de cellules (1a) de la batterie (1) dans un premier état de charge défini et les décharge jusqu'à un deuxième état de charge défini de préférence en sachant sur la base d'au moins une détection d'état de la batterie réalisée préalablement que ces cellules (1a) présentent la plus grande capacité, la plus petite capacité et/ou une capacité moyenne, pour ainsi déterminer la capacité de la batterie (1) à l'aide du plus petit nombre de cellules (1a).

**18.** Dispositif selon l'une des revendications 13 à 17, **caractérisé en ce que**

- le deuxième module de commande (9) commande un circuit (4) d'équilibrage des cellules, en particulier d'équilibrage des cellules par induction, qui amène la ou les cellules (1a) de la batterie (1) dans un premier état de charge défini et les décharge jusqu'à un deuxième état de charge défini.

**19.** Dispositif selon la revendication 18, **caractérisé en ce que**

- le module (4a) de mesure de charge est intégré dans le circuit (4) d'équilibrage des cellules.

EP 2 419 990 B1

**Fig. 1**

**Fig. 2**

EP 2 419 990 B1

**Fig. 3**

**Fig. 4**

**Fig. 5**

Fig. 6

**EP 2 419 990 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2006240291 A